# EUROPEAN PATENT SPECIFICATION

(11) **EP 2 077 597 B1**
(45) Date of publication and mention of the grant of the patent: **19.11.2014**
(21) Application number: 07828467.6
(22) Date of filing: 26.09.2007
(51) Int. Cl.: H01M 8/04, H01M 8/24, H01M 8/12, H01M 8/02

(54) **Fuel cell stack with uniform temperature distribution along the stacking axis**
Brennstoffzellenstapel mit homogener Temperaturverteilung entlang der Stapelachse
Empilement de piles à combustible ayant une distribution de température homgène le long de l'axe d'empilement

(30) Priority: 27.09.2006 JP 2006262418
(43) Date of publication of application: 08.07.2009
(73) Proprietor: Kyocera Corporation, Kyoto-shi, Kyoto 612-8501 (JP)
(72) Inventor: ONO, Takashi, Kirishima-shi, Kagoshima 899-4312 (JP)
(74) Representative: Beetz & Partner
(86) International application number: PCT/JP2007/068721
(87) International publication number: WO 2008/041593

(56) References cited:
- EP-A1- 1 686 642
- EP-A1- 1 777 770
- JP-A- 6 251 790
- JP-A- 10 247 507
- JP-A- 2005 190 980
- JP-A- 2005 190 981
- JP-A- 2005 235 550
- US-A1- 2006 046 117
- US-A1- 2006 105 213

## Description

### Technical Field

The present invention relates to a fuel cell stack constructed by arranging a plurality of fuel cells, as well as to a fuel cell apparatus constructed by housing the fuel cell stack into place.

### Background Art

As the coming generation of energy, in recent years, there have been proposed various types of fuel cell apparatuses each constructed by placing, inside a housing, a fuel cell stack composed of an array of a plurality of fuel cells capable of obtaining electric power by exploiting a fuel gas and air (oxygen-containing gas) that are electrically connected in series to each other.

In such a fuel cell apparatus, a hydrogen gas is used as a fuel gas for use in electric power generation. Electric power is generated through a predetermined electrode reaction induced by bringing the hydrogen gas into contact with a fuel-side electrode layer of the fuel cell and bringing the oxygen-containing gas into contact with an air-side electrode layer of fuel cell.

In this connection, there have been proposed many fuel cell stacks each constructed by arranging a plurality of fuel cells (for example, refer to Japanese Unexamined Patent Publication JP-A 2003-308857).

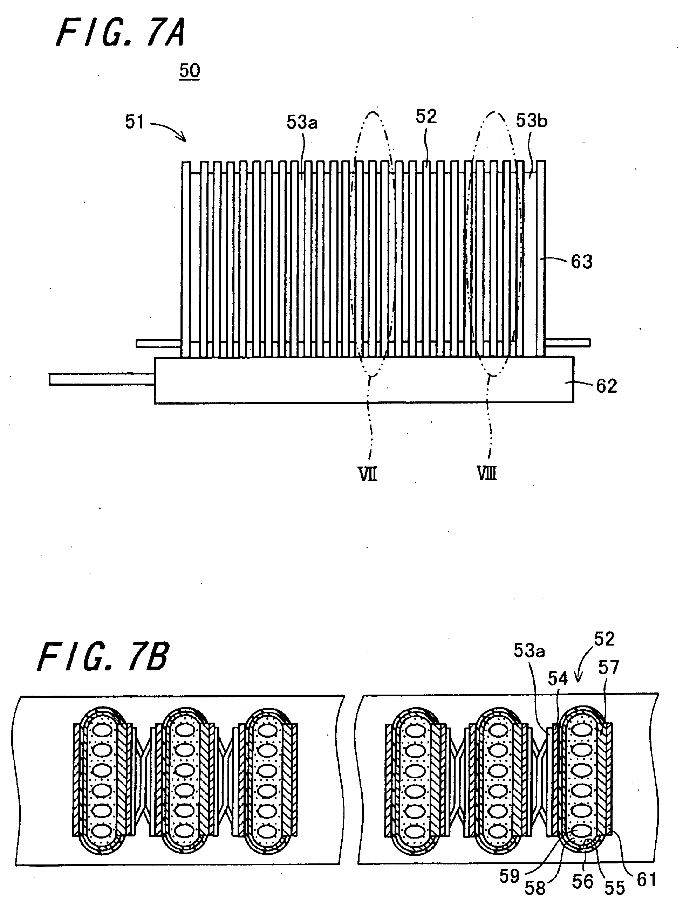

Figs. 7A and 7B each show a schematic diagram of one example of such a fuel cell stack. Fig. 7A is a side view schematically showing a conventional fuel cell stack 51, and Fig. 7B is a partly enlarged plan view of the conventional fuel cell stack 51. Note that, in Fig. 7B, the left-hand part shows an enlarged plan view of Section VII of Fig. 7A, whereas the right-hand part shows an enlarged plan view of Section VIII of Fig. 7A. In the fuel cell stack 51 shown in Figs. 7A and 7B, a plurality of fuel cells are arranged side by side in such a manner as to provide uniformity in the interval between the adjacent fuel cells.

The fuel cells constituting the fuel cell stack produce heat in accompaniment with generation of electric power. The heat produced with the electric power generation in the fuel cells is dissipated through a gap between the adjacent fuel cells and so forth.

However, in the fuel cell stack constructed by arranging a plurality of (especially, a multiplicity of) fuel cells, the fuel cells liberate heat energy due to Joule heat and reaction heat of their own in the course of electric power generation. In particular, in a plurality of fuel cells arranged centrally in the direction of arrangement of the fuel cells, due to the presence of a multiplicity of fuel cells arranged on both sides thereof, the heat energy cannot be dissipated readily and thus the temperature tends to become higher.

On the other hand, in a plurality of fuel cells arranged at either end in the direction of arrangement of the fuel cells, since the number of the fuel cells arranged adjacent thereto is small, or since no fuel cell lies adjacent thereto, it follows that the heat energy can be dissipated readily. In consequence, the fuel cells arranged at either end in the direction of arrangement of the fuel cells are prone to undergo a decrease in temperature.

That is, the midportion of the fuel cell stack in the direction of arrangement of the fuel cells is high in temperature, whereas the end part of the fuel cell stack in the direction of arrangement of the fuel cells is low in temperature. Therefore, the fuel cell stack poses nonuniformity of temperature distribution (hill-form temperature distribution) in the direction of arrangement of the fuel cells, which may cause a decrease in power generation efficiency.

JP 06251790 A discloses a fuel cell where plural unit cells and separator plates are laminated alternately. A thickness of the separator plate in the central part of the stack is made thicker than in the other part.

EP 1686642 A1 discloses a fuel cell stack in which electricity generators and separators are stacked. The stack comprises heat releasing means. Those in the center of the stack are thicker than other ones.

### Disclosure of the invention

It is the object of the invention to provide a fuel cell stack and a fuel cell apparatus with improved uniformity of the temperature distribution along the stack.

This object is accomplished by the features of claim 1.

The invention provides a fuel cell stack comprising:
- an array of a plurality of fuel cells electrically connected in series to each other, the fuel cells each being formed by laminating a fuel-side electrode layer, a solid-state electrolytic layer, and an air-side electrode layer one after another on a support substrate,
an interval between adjacent fuel cells arranged in a midportion of the fuel cell stack in a direction of arrangement of the fuel cells being wider than an interval between a plurality of the fuel cells arranged at either end of the fuel cell stack in the direction of arrangement of the fuel cells.

According to such a fuel cell stack, the interval between adjacent fuel cells arranged in the midportion of the fuel cell stack in the direction of arrangement of the fuel cells (hereafter occasionally abbreviated as "midportion") is set to be wider than the interval between adjacent fuel cells arranged at either end of the fuel cell stack in the direction of arrangement of the fuel cells (hereafter occasionally abbreviated as "end"). The fuel cells in the middle of the stack are thinner than those at the ends of the stade. By doing so, the temperature distribution in the direction of placement of the fuel cell stack can be made uniform (or made as nearly uniform as possible).

That is, in general, in a fuel cell stack constructed by arranging a plurality of fuel cells, the fuel cells liberate heat energy due to Joule heat and reaction heat of their own in the course of electric power generation. At this time, in the fuel cells arranged in the midportion, due to the presence of a multiplicity of fuel cells arranged on both sides thereof, the heat energy cannot be dissipated readily and thus the temperature becomes higher.

On the other hand, in the fuel cells arranged at either end in the direction of arrangement of the fuel cells, since the number of the fuel cells arranged adjacent thereto is small, or since no fuel cell lies adjacent thereto, it follows that the heat energy can be dissipated readily and thus a decrease in temperature tends to occur.

As a consequence, the temperature distribution becomes uneven; that is, the midportion of the fuel cell stack is in a high-temperature state, whereas either end of the fuel cell stack is in a low-temperature state. This may cause a decrease in power generating efficiency.

Therefore, in the fuel cell stack of the invention, the interval between a plurality of the fuel cells arranged in the midportion of the fuel cell stack in the direction of arrangement of the fuel cells is set to be wider than the interval between a plurality of the fuel cells arranged at either end of the fuel cell stack in the direction of arrangement of the fuel cells. This helps facilitate heat-energy dissipation in a plurality of the fuel cells arranged in the midportion, wherefore the temperature of a plurality of the fuel cells arranged in the midportion can be lowered. Moreover, in a plurality of the fuel cells arranged at either end of the fuel cell stack in the direction of arrangement of the fuel cells, the interval between the adjacent fuel cells is set to be narrower than the interval between the adjacent ones of a plurality of the fuel cells arranged in the midportion. This leads to difficulty in heat dissipation, wherefore a decrease in temperature can be suppressed (or temperature rise can be induced). In this way, the temperature distribution of the fuel cell stack can be made uniform (or made as nearly uniform as possible) and a decrease of power generation efficiency in the fuel cell stack can thus be suppressed.

Moreover, in the fuel cell stack of the invention, it is preferable that the plurality of the fuel cells arranged at either end are so arranged that the interval between the adjacent fuel cells becomes narrower gradually with approach toward a corresponding extremity in the direction of arrangement of the fuel cells.

According to such a fuel cell stack, since the plurality of the fuel cells arranged at either end are so arranged that the interval between the adjacent fuel cells becomes narrower gradually with approach toward the corresponding extremity in the direction of arrangement of the fuel cells, it follows that the temperature distribution of the fuel cell stack can be uniformized (or made as nearly uniform as possible) and a decrease of power generation efficiency in the fuel cell stack can thus be suppressed.

Moreover, the plurality of the fuel cells arranged at either end are so arranged that the interval between the adjacent fuel cells becomes narrower gradually from the midportion to the corresponding extremity in the direction of arrangement of the fuel cells. In this case, since the interval between the adjacent fuel cells varies, for example, increases (or decreases) rapidly, it is possible to suppress application of an excessive stress to a plurality of the fuel cells arranged at either end, and thereby enhance the reliability of the fuel cell stack.

In the fuel cell stack of the invention, the plurality of the fuel cells arranged in the midportion in the direction of arrangement of the fuel cells are made smaller in thickness than the plurality of the fuel cells arranged at either end in the direction of arrangement of the fuel cells.

According to such a fuel cell stack of the invention, in constructing the fuel cell stack by arranging a plurality of fuel cells side by side, not only it is possible to use fuel cells of varying thickness.

In this case, in the adjacent fuel cells, the interval between the center of one fuel cell and the center of the other fuel cell (for example, the interval between the fuel gas paths, respectively, of the adjacent fuel cells) is set at a fixed value, and the fuel cells arranged in the midportion in the direction of arrangement of the fuel cells are made smaller in thickness than the fuel cells arranged at either end in the arrangement direction. In this way, the interval between a plurality of the fuel cells arranged in the midportion is wider than the interval between a plurality of the fuel cells arranged at either end, wherefore the temperature distribution in the direction of placement of the fuel cell stack can be made uniform (or made as nearly uniform as possible).

Moreover, in the fuel cell stack of the invention, it is preferable that the fuel cell is a hollow flat plate-shaped fuel cell and is disposed uprightly in a manifold for supplying a fuel gas to the fuel cell.

According to such a fuel cell stack, the fuel cell is formed in the shape of a hollow flat plate and is disposed uprightly in the manifold for supplying a fuel gas to the fuel cell. In this case, it is possible to manufacture with ease the fuel cell stack in which are arranged the fuel cells side by side at varying intervals, as well as to supply a fuel gas to the fuel cells.

Moreover, by forming the fuel cell in the shape of a hollow flat plate, it is possible to manufacture with ease the fuel cell stack that is low in electrical resistance and is thus capable of exhibiting high power generation capability, in which are arranged the fuel cells side by side at varying intervals.

The invention provides a fuel cell apparatus comprising:
any of the fuel cell stacks as set forth hereinabove;
oxygen-containing gas supply means for feeding an oxygen-containing gas to the fuel cell; and
a housing for accommodating therein the fuel cell stack and the oxygen-containing gas supply means,
an oxygen-containing gas being supplied from a side face of the fuel cell stack along the direction of arrangement of the fuel cells, and the oxygen-containing gas flowing between the fuel cells.

According to such a fuel cell apparatus, inside the housing are accommodated the fuel cell stack and the oxygen-containing gas supply means for feeding an oxygen-containing gas to the fuel cell. In this construction, an oxygen-containing gas is supplied from the side face of the fuel cell stack along the direction of arrangement of the fuel cells, and the thereby supplied oxygen-containing gas flows between the fuel cells. By virtue of the oxygen-containing gas traveling between the fuel cells, it is possible to decrease the temperature of the fuel cells.

In this case, in the fuel cell stack constructed by arranging a plurality of the fuel cells, a wider interval is secured between a plurality of the fuel cells arranged in the midportion in the direction of arrangement of the fuel cells. This makes it possible to increase the amount of flow of the oxygen-containing gas flowing between a plurality of the fuel cells arranged in the midportion, and thereby enhance the effect of cooling down a plurality of the fuel cells arranged in the midportion.

On the other hand, in the plurality of the fuel cells arranged at either end in the direction of arrangement of the fuel cells, the interval between the adjacent ones is set to be narrower than the interval between a plurality of the fuel cells arranged in the midportion. Therefore, the amount of flow of the oxygen-containing gas flowing between a plurality of the fuel cells arranged at either end is smaller than the amount of flow of the oxygen-containing gas flowing between a plurality of the fuel cells arranged in the midportion. As a result, the cooling effect exerted on a plurality of the fuel cells arranged at either end is lower than the cooling effect exerted on a plurality of the fuel cells arranged in the midportion.

In this way, the temperature distribution of the fuel cell stack can be made uniform (or made as nearly uniform as possible) even further and a decrease in power generation efficiency in the fuel cell stack can be suppressed. Accordingly, it is possible to obtain a fuel cell apparatus that succeeds in providing enhanced power generation efficiency.

Moreover, in the fuel cell apparatus of the invention, it is preferable that the fuel cells are electrically connected in series to each other via a power collecting member, and that the power collecting member is so shaped as to permit of circulation of the oxygen-containing gas.

According to such a fuel cell apparatus, since the fuel cells are electrically connected in series to each other via the power collecting member, it is possible to collect electricity generated by the fuel cells with high efficiency.

Moreover, the power collecting member is so shaped as to permit of circulation of the oxygen-containing gas. This makes it possible to allow the oxygen-containing gas supplied from the side face of the fuel cell stack along the direction of arrangement of the fuel cells to flow between the adjacent fuel cells readily. In this way, the temperature distribution of the fuel cell stack can be uniformized (or made as nearly uniform as possible), wherefore it is possible to produce a fuel cell apparatus that succeeds in providing enhanced power generation efficiency.

Moreover, in the fuel cell apparatus of the invention, it is preferable that the oxygen-containing gas supply means is disposed so that the oxygen-containing gas is allowed to flow within the oxygen-containing gas supply means in a direction from top to bottom along the fuel cell.

According to such a fuel cell apparatus, the oxygen-containing gas supply means is disposed so that the oxygen-containing gas is allowed to flow within the oxygen-containing gas supply means in the direction from top to bottom along the fuel cell. In this way, the temperature distribution in the direction of from top to bottom of the fuel cell can be uniformized (or made as nearly uniform as possible).

Note that the fuel cells constituting the fuel cell stack show a tendency that the upper part thereof is in a high-temperature state, whereas the lower part thereof is in a low-temperature state.

Therefore, as the oxygen-containing gas is allowed to flow within the oxygen-containing gas supply means in the direction from top to bottom along the fuel cell, the oxygen-containing gas is heated up while flowing through the fuel cell in the direction from top to bottom thereof.

Then, the oxygen-containing gas in a heated state flows toward the lower part of the fuel cell, wherefore the temperature of the lower part of the fuel cell can be raised.

In this way, the temperature distribution in the direction of from top to bottom of the fuel cell can be uniformized. This makes it possible to enhance the power generation efficiency in the fuel cell, and thereby produce a fuel cell apparatus that succeeds in providing enhanced power generation efficiency.

Moreover, in the fuel cell apparatus of the invention, it is preferable that a reformer for generating a fuel gas which is supplied to the fuel cell is provided above the fuel cell stack.

According to such a fuel cell apparatus, the reformer for generating a fuel gas which is supplied to the fuel cell is provided above the fuel cell stack. In this case, the reformer is heated up by the heat from the fuel cell stack.

Note that, in the fuel cell stack of the invention, the temperature distribution in the direction of arrangement of the fuel cells can be uniformized (or made as nearly uniform as possible). Therefore, the temperature of the reformer can be raised more efficiently and a reforming reaction can thus be developed efficiently in the reformer. This makes it possible to produce a fuel cell apparatus whose power generation efficiency is enhanced even further.

In the fuel cell stack of the invention, the interval between a plurality of the fuel cells arranged in the midportion in the direction of arrangement of the fuel cells is set to be wider than the interval between a plurality of the fuel cells arranged at either end in the direction of arrangement of the fuel cells. In this way, the temperature distribution of the fuel cell stack in the direction of arrangement of the fuel cells can be uniformized, wherefore a decrease in power generation efficiency can be suppressed.

### Brief description of Drawings

Other and further objects, features, and advantages of the invention will be more explicit from the following detailed description taken with reference to the drawings wherein:
Figs. 1A and 1B show a fuel cell stack apparatus having a fuel cell stack of the prior art; Fig. 1A is a side view schematically showing the fuel cell stack apparatus, and Fig. 1B is a partly enlarged plan view of the fuel cell stack apparatus depicted in Fig. 1A;
Figs. 2A and 2B show a fuel cell stack apparatus having the fuel cell stack of the prior art; Fig. 2A is a side view schematically showing the fuel cell stack apparatus, and Fig. 2B is a partly enlarged plan view of the fuel cell stack apparatus depicted in Fig. 2A;
Figs. 3A and 3B show a fuel cell stack apparatus having the fuel cell stack in accordance with the invention; Fig. 3A is a side view schematically showing the fuel cell stack apparatus, and Fig. 3B is a partly enlarged plan view of the fuel cell stack apparatus depicted in Fig. 3A;
Fig. 4 is an external perspective view showing one example of a fuel cell apparatus according to the invention;
Fig. 5 is a sectional view of the fuel cell apparatus taken along the section line X-X shown in Fig. 4;
Fig. 6 is a perspective view showing one example of a power collecting member for establishing electrical connection of fuel cells of the invention; and
Figs. 7A and 7B show one example of a fuel cell stack apparatus having a conventional fuel cell stack; Fig. 7A is a side view schematically showing the fuel cell stack apparatus, and Fig. 7B is a partly enlarged plan view of the fuel cell stack apparatus depicted in Fig. 7A.

### Best Mode for Carrying out the Invention

Now referring to the drawings, preferred embodiments of the invention will be described in detail.

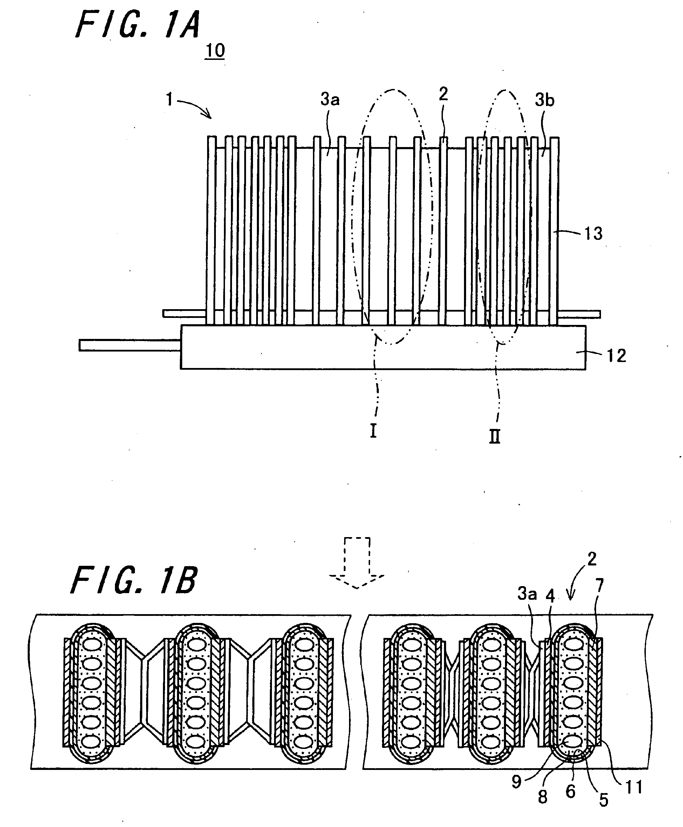

Figs. 1A and 1B show a fuel cell stack apparatus 10 having a fuel cell stack 1. Fig. 1A is a side view schematically showing the fuel cell stack apparatus 10, and Fig. 1B is a partly enlarged plan view of the fuel cell stack apparatus 10 depicted in Fig. 1A. Note that, in Fig. 1B, the left-hand part shows an enlarged plan view of Section I of Fig. 1A, whereas the right-hand part shows an enlarged plan view of Section II of Fig. 1A. Moreover, in the figures, like members are identified by the same reference numbers, and this holds true for what follows. Further, an arrow shown by a dotted line in Fig. 1B indicates a direction in which an oxygen-containing gas flows.

The fuel cell stack apparatus 10 of the invention includes the fuel cell stack 1 and a manifold 12. The fuel cell stack 1 is constructed by electrically connecting a plurality of fuel cells 2 in series with each other. Each of the fuel cells 2 is formed by laminating a fuel-side electrode layer 5, a solid-state electrolytic layer 6, and an air-side electrode layer 4 one after another on a support substrate 8. The fuel cell stack 1 is fixedly attached to the manifold 12, with the fuel cells 2 arranged in an array. In addition to that, a power collecting member 3a is set between the adjacent fuel cells 2, and an end-side power collecting member 3b is set between the adjacent fuel cells 2 located on either side of the fuel cell stack in the direction of arrangement of the fuel cells 2. The fuel cell stack apparatus 10 is provided with an alloy-made holding member 13 which is uprightly fixed to the manifold 12 for supplying a fuel gas to the fuel cells 2 so as to retain the fuel cell stack 1 via the end-side power collecting member 3b from either side of the fuel cell stack in the direction of arrangement of the fuel cells 2.

Note that one ends (lower ends) of, respectively, the fuel cell 2 and the holding member 13 are buried in and bonded to the manifold 12 by means of, for example, a glass sealing material (not shown in the figure) having high heat resistance.

In this embodiment, the fuel cell 2 is formed in the shape of a hollow flat plate. The fuel cell 2 is constructed of a columnar conductive support substrate 8 having a pair of opposite flat surfaces, on one of the flat surfaces of which are successively laminated the fuel-side electrode layer 5, the solid-state electrolytic layer 6, and the air-side electrode layer 4, and on the other flat surface of which is disposed an interconnector 7. In addition, a fuel gas flow channel 9 is disposed in the conductive support substrate 8 interiorly thereof for permitting of circulation of a reaction gas (fuel gas). In the invention, such a configuration is defined as "hollow flat-plate shape".

Moreover, a P-type semiconductor 11 may be disposed on the outer surface (top surface) of the interconnector 7. By connecting the power collecting member 3a to the interconnector 7 via the P-type semiconductor 11, it is possible to establish ohmic contact between them. In this case, the degree of potential drop is lessened, wherefore a deterioration in electricity collecting capability can be avoided effectively. Note that each of the components constituting the fuel cell 2 will hereafter be described in detail.

Further, the conductive support substrate 8 may be so designed as to serve also as the fuel-side electrode layer 5. In this case, the fuel cell 2 can be constructed by laminating, on the surface of such a conductive support substrate, the solid-state electrolytic layer 6 and the air-side electrode layer 4 successively.

The fuel cell stack 1 is **characterized in that** the interval between a plurality of the fuel cells 2 arranged in the midportion of the fuel cell stack in the direction of arrangement of the fuel cells 2 is set to be wider than the interval between a plurality of the fuel cells 2 arranged at either end of the fuel cell stack in the direction of arrangement of the fuel cells 2.

Note that, in the invention, "a plurality of the fuel cells 2 arranged in the midportion of the fuel cell stack in the direction of arrangement of the fuel cells 2 (hereafter occasionally abbreviated as "midportion")" refer to the fuel cells arranged centrally in the direction of arrangement of a plurality of the fuel cells 2 and the fuel cells arranged in the vicinity thereof. In consideration of the length of the fuel cell stack in the direction of arrangement of the fuel cells 2, the size of the fuel cell 2, and so forth, the number of the fuel cells concerned may be determined as appropriate.

As for a plurality of the fuel cells 2 arranged at either end of the fuel cell stack in the direction of arrangement of the fuel cells 2, the number of the fuel cells concerned may also be determined as appropriate in consideration of the length of the fuel cell stack in the direction of arrangement of the fuel cells 2, the size of the fuel cell 2, and so forth.

Hence it follows that, to be specific, the fuel cells 2 arranged within a region constituting about a third of the length of the fuel cell stack located centrally with respect to the midportion in the direction of arrangement of the fuel cells 2 can be defined as "a plurality of the fuel cells 2 arranged in the midportion", whereas the fuel cells 2 arranged within a region constituting about a third of the length of the fuel cell stack lying between either end and the midportion in the direction of arrangement of the fuel cells 2 can be defined as "a plurality of the fuel cells 2 arranged at either end". Note that between a group of a plurality of the fuel cells 2 arranged in the midportion and a group of a plurality of the fuel cells 2 arranged at either end can be arranged the fuel cell 2 which is independent of the two groups.

Incidentally, the fuel cell stack constructed by arranging a plurality of the fuel cells produces heat in accompaniment with generation of electric power in the fuel cells.

In the course of electric power generation, the fuel cells liberate heat energy because of Joule heat and reaction heat of their own. At this time, in terms of dissipation of the heat energy, there arises a difference between the fuel cells 2 arranged in the midportion and the fuel cells 2 arranged at either end.

That is, in the fuel cells arranged in the midportion, due to the presence of a multiplicity of fuel cells 2 arranged on both sides thereof, the heat energy cannot be dissipated readily. On the other hand, in the fuel cells 2 arranged at either end, since the number of fuel cells arranged adjacent thereto is small or since no fuel cell lies adjacent thereto as seen in one direction, the heat energy can be dissipated readily.

As a result, the fuel cell stack constructed by arranging a plurality of the fuel cells incurs uneven temperature distribution in the direction of arrangement of the fuel cells (the midportion is in a high-temperature state, whereas either end is in a low-temperature state). This may cause a deterioration in the power generation capability of the fuel cell stack.

As is apparent from Figs. 1A and 1B, in the fuel cell stack 1, the interval between a plurality of the fuel cells 2 arranged in the midportion of the fuel cell stack in the direction of arrangement of the fuel cells 2 is set to be wider than the interval between a plurality of the fuel cells 2 arranged at either end of the fuel cell stack in the direction of arrangement of the fuel cells 2. This helps facilitate heat-energy dissipation in the fuel cells 2 arranged in the midportion, wherefore the temperature of the midportion of the fuel cell stack 1 can be lowered.

On the other hand, in a plurality of the fuel cells 2 arranged at either end, the interval between the adjacent fuel cells 2 is set to be narrower than the interval between a plurality of the fuel cells 2 arranged in the midportion. Therefore, as compared with the case for the midportion, the heat energy cannot be dissipated readily, with the result that a drop in the temperature of the end-side part of the fuel cell stack 1 is suppressed or the temperature of the end-side part is caused to rise.

Hence, in contrast to the conventional fuel cell stack, the fuel cell stack 1 assumes a gently-curved temperature distribution shape. Moreover, by making adjustment to the interval between the adjacent fuel cells 2 properly, it is possible to make the temperature distribution of the fuel cell stack 1 as nearly uniform as possible.

Accordingly, the fuel cell stack 1 of the invention can be implemented as the fuel cell stack 1 that offers improved power generation capability.

Moreover, it is essential only that the interval between a plurality of the fuel cells 2 arranged at either end be narrower than the interval between a plurality of the fuel cells 2 arranged in the midportion. That is, in a plurality of the fuel cells 2 arranged in the midportion or at either end, the adjacent fuel cells 2 may be arranged at a uniform interval. Further, a plurality of the fuel cells 2 arranged at either end may be so arranged that the interval between the adjacent fuel cells 2 becomes wider gradually with approach toward the corresponding extremity.

Hereinafter, other members for constituting the fuel cell stack 1 of the invention will be described.

The support substrate 8 is required to be gas-permeable for allowing a fuel gas to permeate to the fuel-side electrode layer 5, and is also required to be electrically conductive for collecting electricity through the interconnector 7. It is thus necessary to adopt a material that satisfies such requirements for the support substrate 8. For example, electrically conductive ceramic or cermet may be used.

The power collecting member 3a and the end-side power collecting member 3b may be constructed of a component made of an elastic metal or alloy, or a component formed by performing a predetermined surface treatment on a felt made of metallic fiber or alloy fiber. Note that, in order for the fuel cells 2 arranged at different intervals to be electrically connected to one another, the power collecting member 3a of the invention should preferably be constructed of a component made of an elastic alloy. This makes it possible to establish electrical connection of the fuel cells 2. Note that, for example, it is possible to place the power collecting member 3a whose size is changed in accordance with the interval between the fuel cells 2. The shape of the power collecting member 3a will be described later on.

There is no particular limitation to the material used for the air-side electrode layer 4 so long as it is commonly used. For example, the air-side electrode layer 4 may be formed of electrically conductive ceramic made of a so-called ABO₃ type perovskite oxide. The air-side electrode layer 4 needs to be designed to exhibit gas permeability and should preferably have an open porosity of greater than or equal to 20%, and more particularly an open porosity falling within a range from 30 to 50%.

As the fuel-side electrode layer 5, a generally known material may be used. The fuel-side electrode layer 5 may be formed of porous conductive ceramic, for example, ZrO₂ solid solution containing a rare earth element (called stabilized zirconia), and Ni and/or NiO.

The solid-state electrolytic layer 6 is required to function as an electrolyte for interfacing electrons between the electrodes, as well as to have a gas barrier property for prevention of the leakage of a fuel gas and an oxygen-containing gas. The solid-state electrolytic layer 6 is thus formed of ZrO₂ solid solution containing a rare earth element in an amount of 3 to 15 mol%. Note that any other material may be used to form the solid-state electrolytic layer 6 so long as it has the aforestated characteristics.

The interconnector 7, which may be formed of electrically conductive ceramic, is required to exhibit resistance to reduction and resistance to oxidation as well because it is brought into contact with a fuel gas (hydrogen gas) and an oxygen-containing gas (air or the like). Therefore, a lanthanum chromite-based perovskite-type oxide (LaCrO₃-based oxide) is desirable for use. In order to prevent the leakage of a fuel gas which passes through the fuel gas flow channel 9 formed in the support substrate 8 and the leakage of an oxygen-containing gas which flows outside of the support substrate 8 as well, the interconnector 7 needs to have a dense. It is thus preferable that the interconnector 7 has a relative density of 93% or above, and more particularly 95% or above.

For example, the support substrate 8 may be designed as a hollow flat plate-shaped support substrate. In this case, the support substrate 8 is formed in the shape of a slim plate-like piece that extends in an upstanding direction and has opposite flat surfaces and opposite semicircular side faces. In the support substrate 8 are formed a plurality (six pieces, in Fig. 1B) of fuel gas flow channels 9 so as to pass through the interior of the support substrate 8 in the upstanding direction. Each of the fuel cells 2 is bonded to the upper wall (top) of the manifold 12 for supplying a fuel gas by means of, for example, a glass sealing material 12 having high heat resistance. The fuel gas flow channel 9 of the fuel cell 2 is communicated with a fuel gas chamber (not shown in the figure).

In a case where the support substrate 8 is produced by co-firing with at least one of the fuel-side electrode layer 5 and the solid-state electrolytic layer 6, it is desirable to form the support substrate 8 with use of an iron-family metal component and a specific rare earth oxide. Moreover, in order to provide necessary gas permeability, the conductive support substrate 8 should preferably have an open porosity of greater than or equal to 30%, and more particularly an open porosity falling within a range from 35 to 50%. It is also preferable that the electrical conductivity of the conductive support substrate 8 is greater than or equal to 300S/cm, and more particularly greater than or equal to 440S/cm.

Moreover, as an example of the P-type semiconductor layer 11, a layer made of a transition metal perovskite-type oxide may be taken up. To be specific, it is possible to use a material which is greater in electron conductivity than the lanthanum chromite-based perovskite-type oxide (LaCrO₃-based oxide) for forming the interconnector 7, for example, P-type semiconductor ceramic made of at least one which contains Mn, Fe, Co, or the like in the B-site, a LaMnO₃-based oxide, a LaFeO₃-based oxide, a LaCoO₃-based oxide, and so forth. In general, it is preferable that such a P-type semiconductor layer 6 ranges in thickness from 30 to 100 µm.

Note that, in Figs. 1A and 1B, the fuel cell 2 constituting the fuel cell stack 1 is illustrated as a hollow flat plate-shaped fuel cell, and the fuel cell stack 1 is illustrated as being composed of the fuel cells 2 of the same thickness (having the same thickness in the arrangement direction). In this construction, by arranging the fuel cells 2 at varying intervals, it is possible to manufacture with ease the fuel cell stack 1 in which are arranged the fuel cells 2 at varying intervals. Note that, in order to achieve the arrangement of the fuel cells with varying intervals, for example, the fuel cells may vary in thickness (have different thicknesses in the arrangement direction).

Moreover, in a case where the interval between the adjacent fuel cells arranged in the midportion is set to be wider than the interval between the adjacent fuel cells arranged at either end, the intervals may be determined as appropriate in consideration of the shape of the fuel cell, the number of the fuel cells, and so forth. For example, the interval between the adjacent fuel cells arranged in the midportion may be set at 3 mm, and the interval between the adjacent fuel cells arranged at either end may be set at 2 mm. Note that "the interval between the fuel cells" may be defined as "the interval between the surfaces of the adjacent fuel cells".

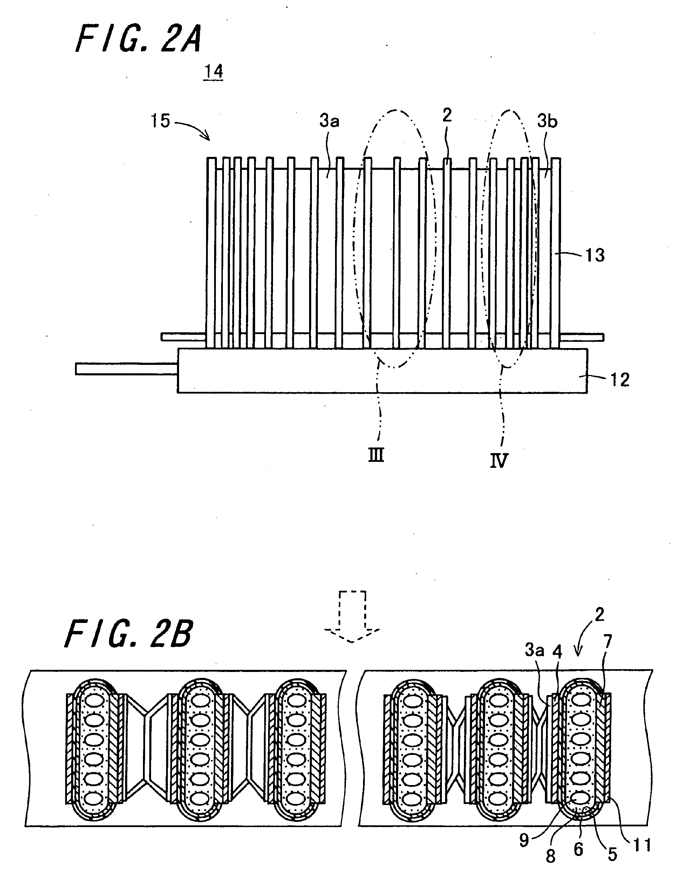

Figs. 2A and 2B show an example of a fuel cell stack apparatus 14 in which a plurality of the fuel cells 2 arranged at either end are so arranged that the interval between the adjacent fuel cells 2 becomes narrower gradually with approach toward the corresponding extremity in the direction of arrangement of the fuel cells 2. Note that Fig. 2A is a side view schematically showing the fuel cell stack apparatus 14, and Fig. 2B is a partly enlarged plan view of the fuel cell stack apparatus 14 depicted in Fig. 2A. Note also that, in Fig. 2B, the left-hand part shows an enlarged plan view of Section III of Fig. 2A, whereas the right-hand part shows an enlarged plan view of Section IV of Fig. 2A.

In a fuel cell stack 15 thereby constructed, a plurality of the fuel cells 2 arranged at either end are so arranged that the interval between the adjacent fuel cells 2 becomes narrower gradually from the midportion to the corresponding extremity in the direction of arrangement of the fuel cells 2. In this construction, the temperature distribution of the fuel cell stack 15 can be made as nearly uniform as possible.

That is, a plurality of the fuel cells 2 arranged at either end are so arranged that the interval between the adjacent fuel cells 2 becomes narrower gradually with approach toward the corresponding extremity in the arrangement direction. In this construction, since the interval between the adjacent fuel cells 2 varies, for example, increases (or decreases) suddenly, it is possible to suppress application of an excessive stress to the fuel cells 2 and the power collecting member 3a, and thereby enhance the reliability of the fuel cell stack 14.

Moreover, in the fuel cell stack constructed by arranging a plurality of the fuel cells 2, the fuel cells 2 may be so arranged that the interval between the adjacent fuel cells 2 becomes narrower gradually from the midportion to either end in the direction of arrangement of the fuel cells 2.

In Fig. 2, there is shown such a fuel cell stack apparatus 14 in which the temperature distribution of the fuel cell stack 15 can be made as nearly uniform as possible even further.

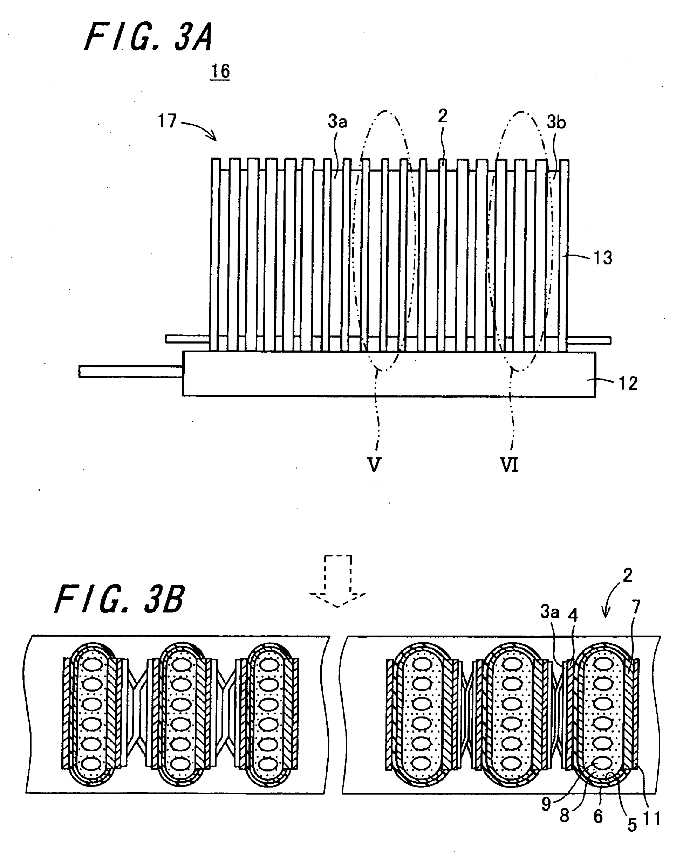

Figs. 3A and 3B show an example of a fuel cell stack apparatus 16 in which a plurality of the fuel cells 2 arranged in the midportion are made smaller in thickness (thickness in the arrangement direction) than a plurality of the fuel cells 2 arranged at either end. Note that Fig. 3A is a side view schematically showing the fuel cell stack apparatus 16, and Fig. 3B is a partly enlarged plan view of the fuel cell stack apparatus 16 depicted in Fig. 3A. Note also that, in Fig. 3B, the left-hand part shows an enlarged plan view of Section V of Fig. 3A, whereas the right-hand part shows an enlarged plan view of Section VI of Fig. 3A.

In a fuel cell stack 17 thereby constructed, the interval between the adjacent fuel cells (for example, the interval between the center of one fuel cell and the center of the other fuel cell in a plan view thereof) is set at a predetermined value, and a plurality of the fuel cells 2 arranged in the midportion are made smaller in thickness than a plurality of the fuel cells 2 arranged at either end. In this way, the interval between the adjacent ones of a plurality of the fuel cells 2 arranged in the midportion is wider than the interval between the adjacent ones of a plurality of the fuel cells 2 arranged at either end.

To be specific, for example, the interval between the adjacent fuel cells 2 (the interval between the center of one fuel cell 2 and the center of the fuel cell 2 placed adjacent thereto) is set at 5 mm. Then, the thickness of each of a plurality of the fuel cells 2 arranged in the midportion is set at 2 mm and the thickness of each of a plurality of the fuel cells 2 arranged at either end is set at 3 mm. In this way, the interval between a plurality of the fuel cells 2 arranged in the midportion is wider than the interval between a plurality of the fuel cells 2 arranged at either end. Note that the interval between the adjacent fuel cells 2 and the thickness of the fuel cell 2 may be determined as appropriate in consideration of the size of the fuel cell, the size of the fuel cell stack, and so forth. For example, in a plurality of the fuel cells arranged at either end, the thickness of the fuel cell 2 may be charged on an as needed basis so long as it is smaller than the thickness of each of a plurality of the fuel cells 2 arranged in the midportion.

In this way, heat-energy dissipation can be facilitated in a plurality of the fuel cells 2 arranged in the midportion, wherefore the temperature of the midportion of the fuel cell stack 17 can be lowered. As a result, the temperature distribution of the fuel cell stack 17 can be made as nearly uniform as possible.

Thus, by placing the fuel cell stack thus far described and oxygen-containing gas supply means for feeding an oxygen-containing gas (air, in general) to the fuel cell 2 in a housing, the fuel cell apparatus of the invention can be provided.

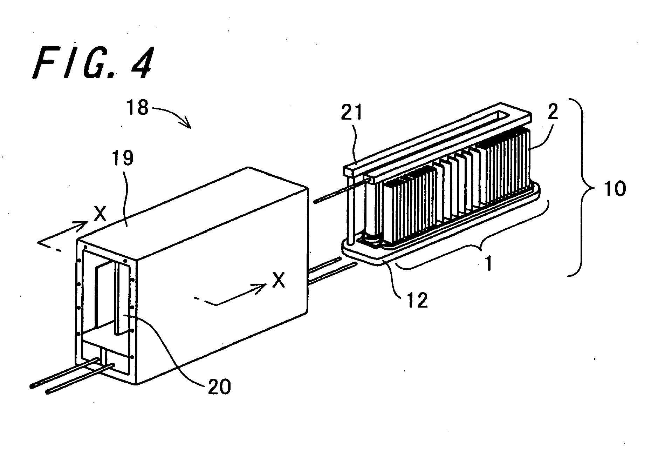

Fig. 4 is an external perspective view showing one example of a fuel cell apparatus according to the invention. A fuel cell apparatus 18 is constructed by placing, inside a housing 19 having the shape of a rectangular prism, the aforestated fuel cell stack and oxygen-containing gas supply means 20 for feeding an oxygen-containing gas to the fuel cell 2. Note that, as the fuel cell stack for use, the fuel cell stack 1 shown in Figs. 1A and 1B is exemplified.

Moreover, in order to obtain a hydrogen gas for use in the fuel cell 2, on the upper part of the fuel cell stack 1 is placed a reformer 21 for generating a hydrogen gas by reforming a fuel such as a natural gas and kerosene. Note that, in Fig. 4, the fuel cell stack apparatus 10 is illustrated as the construction including the reformer 6.

Moreover, in Fig. 4, there is shown a state where part of the housing 19 (front face and rear face) has been removed and the fuel cell stack apparatus 10 placed inside the housing 19 has been pulled out backward. In the fuel 18 shown in Fig. 4, the fuel cell stack apparatus 10 can be slidingly accommodated inside the housing 19.

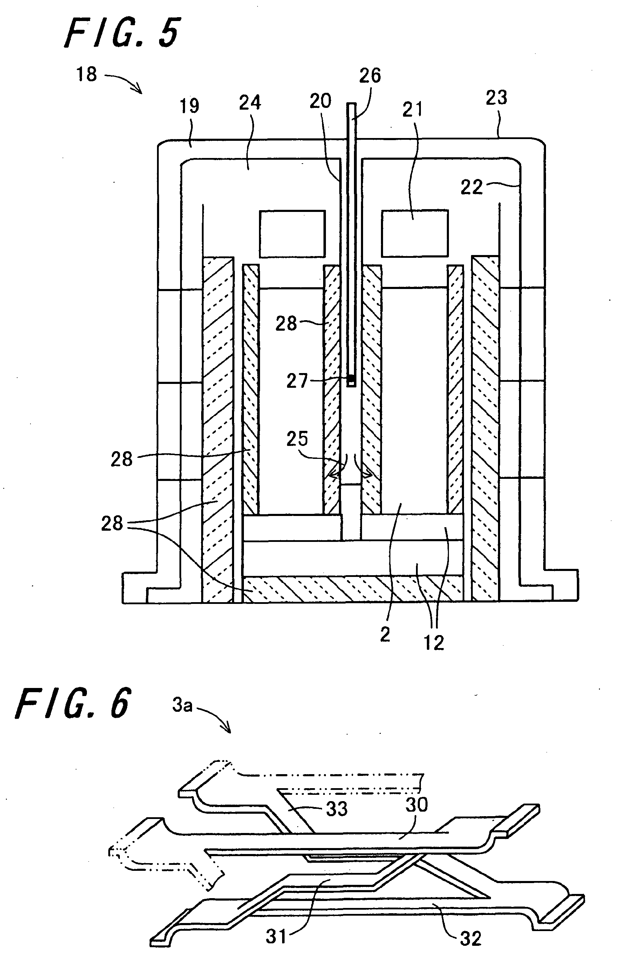

Fig. 5 is a sectional view of the fuel cell apparatus 18 taken along the section line X-X shown in Fig. 4. The housing 19 constituting the fuel 18 takes on a dual structure having an inner wall 22 and an outer wall 23. The outer wall 23 constitutes the outer frame of the housing 19, whereas the inner wall 22 constitutes a power generating chamber 24 for housing the fuel cell stack 1 (the fuel cell stack apparatus 10). Note that a region between the inner wall 22 and the outer wall 23 serves as a flow channel for a reaction gas which is introduced into the fuel cell 2. For example, an oxygen-containing gas and so forth to be introduced into the fuel cell 2 flow through the flow channel.

In the inner wall 22 is disposed an oxygen-containing gas introducing member 20 acting as the oxygen-containing gas supply means, which extends from the top surface of the inner wall 22 to the side-face part of the fuel cell stack 1, is adapted to the width of the fuel cell stack 1 in the arrangement direction, and communicates with the flow channel constituted by the inner wall 22 and the outer wall 23, for introducing an oxygen-containing gas into the fuel cell 2. In addition, on the lower-end side of the oxygen-containing gas introducing member 20 (on the lower-end side of the fuel cell 2) is disposed an outlet port 25 for introducing an oxygen-containing gas into the fuel cell 2.

Note that, in Fig. 5, the oxygen-containing gas introducing member 20 is so designed that a pair of plate-like members arranged side by side at a predetermined spacing constitutes an oxygen-containing gas introducing flow channel and that its lower end is bonded to a bottom member. Moreover, while, in Fig. 5, the oxygen-containing gas introducing member 20 is so placed as to be located between the two fuel cell stacks 1 (fuel cell stack apparatuses 10) juxtaposed to each other within the housing 19, depending upon the number of the fuel cell stacks 1 to be housed, for example, the oxygen-containing gas introducing member 20 may be so disposed as to sandwich the fuel cell stacks 1 from their side faces.

Moreover, a temperature sensor 26 having a temperature measuring portion 27 (for example, a thermocouple or the like) is inserted into the oxygen-containing gas introducing member 20 from the top-surface side of the housing 2. This makes it possible to measure the temperature of the fuel cell stack 1 (the fuel cell 2). In addition, inside the housing 19 is placed a suitable heat insulating material 28. Note that a plurality of the temperature sensors 26 may be arranged for use. In this case, they should preferably be arranged in the midportion and the end-side part of the fuel cell stack, respectively.

Thus, in the fuel cell stack 1, a fuel gas is supplied from the manifold 12 to the fuel cell 2 and an oxygen-containing gas is supplied to the fuel cell 2 as well. With use of these gases, electric power is generated.

In Fig. 5, the supply of an oxygen-containing gas is effected by the oxygen-containing gas introducing member 20 to the fuel cell stack 1 through its side face along the direction of arrangement of the fuel cells 2, and the oxygen-containing gas flows between the fuel cells 2.

That is, as the oxygen-containing gas supplied through the side part of the fuel cell stack 1 flows between the fuel cells 2, heat exchange is conducted by the fuel cells 2 and the oxygen-containing gas, in consequence whereof there results a decrease in temperature in the fuel cells 2.

In regard to the supply of an oxygen-containing gas, it is preferable that an oxygen-containing gas is supplied in such a manner that it is introduced from a certain location in the direction of the side face of the fuel cells 2 (the fuel cell stack 1) and goes around the fuel cell stack 1 as a whole.

In the fuel cell stack 1 placed in the housing 19 shown in Fig. 5 (refer to Fig. 4), a wider interval is secured between a plurality of the fuel cells 2 arranged in the midportion in the direction of arrangement of the fuel cells 2. This makes it possible to increase the amount of flow of the oxygen-containing gas flowing between a plurality of the fuel cells 2 arranged in the midportion, and thereby enhance the effect of cooling down a plurality of the fuel cells 2 arranged in the midportion (the effect of heat exchange).

On the other hand, in a plurality of the fuel cells 2 arranged at either end in the direction of arrangement of the fuel cells 2, the interval of the adjacent fuel cells 2 is set to be narrower. Therefore, the amount of flow of the oxygen-containing gas flowing between a plurality of the fuel cells 2 arranged at either end is smaller than the amount of flow of the oxygen-containing gas flowing between a plurality of the fuel cells 2 arranged in the midportion. As a result, the cooling effect exerted on the fuel cells 2 arranged at either end is lower than that exerted on the fuel cells 2 arranged in the midportion.

Hence, the temperature of a plurality of the fuel cells 2 arranged in the midportion in the direction of arrangement of the fuel cells 2 becomes even lower. This makes it possible to render the temperature distribution of the fuel cell stack 1 as nearly uniform as possible, and thereby suppress a decrease in power generation efficiency in the fuel cell stack 1.

Moreover, the oxygen-containing gas introducing member 20 shown in Fig. 5 is placed in such a manner that an oxygen-containing gas is allowed to flow within the oxygen-containing gas introducing member 20 in the direction from top to bottom along the fuel cell 2.

Further, in Fig. 5, the reformer 21 for supplying a fuel gas (reformed gas) to the fuel cell 2 (the manifold 12) is placed above the fuel cell stack 1.

In such a fuel cell apparatus as is so designed that an unreacted fuel gas is burned on the top-end side of the fuel cell 2 to thereby heat the reformer 21, the fuel cells 2 constituting the fuel cell stack 1 show a tendency that the upper part thereof is in a high-temperature state, whereas the lower part thereof is in a low-temperature state.

Therefore, as an oxygen-containing gas is allowed to flow within the oxygen-containing gas supply means 20 in the direction from top to bottom along the fuel cell 2, the oxygen-containing gas is heated up while flowing through the fuel cell 2 in the direction from top to bottom thereof.

Then, the oxygen-containing gas in a heated state is supplied, through the outlet port 25 formed on the lower-end side of the oxygen-containing gas introducing member 20, to the lower part of the fuel cell 20. As a result, the temperature of the lower part of the fuel cell 20 can be raised.

In this way, the temperature distribution in the direction of from top to bottom (upstanding direction) of the fuel cell 20 can be uniformized, wherefore the power generation efficiency in the fuel cell 20 can be enhanced.

At the same time, the heat from the fuel cell stack 1 is transmitted to the reformer 21, whereupon the bottom surface of the reformer 21 is heated up. In this way, the reformer 21 is able to enhance a reforming reaction by exploiting the heat from the fuel cell stack 1 effectively.

Thus, in the fuel cell apparatus18 of the invention, since the temperature distribution in the direction of arrangement of the fuel cells 2 can be made as nearly uniform as possible, it follows that the reformer 21 can be heated, with its temperature kept more even. Accordingly, a reforming reaction in the reformer 21 can be conducted efficiently, wherefore the fuel cell apparatus 18 succeeds in providing enhanced power generation efficiency.

Fig. 6 shows one example of the power collecting member 3a disposed between the adjacent fuel cells 2 in the fuel cell stack 1.

The power collecting member 3a has, as basic elements, a first electrical conductor piece 30 which abuts against the flat surface of one of the adjacent fuel cells 2, a second electrical conductor piece 31 which extends inclinedly from the end of one of the adjacent fuel cells 2 to the end of the other of the adjacent fuel cells 2, a third electrical conductor piece 32 which abuts against the flat surface of the other of the adjacent fuel cells 2, and a fourth electrical conductor piece 33 which extends inclinedly from the end of the other of the adjacent fuel cells 2 to the end of one of the adjacent fuel cells 2. The first to fourth electrical conductor pieces are each connected to respective following electrical conductor pieces at their ends in this order, and further, the electrical conductor pieces are repeatedly connected in this order. These connections constitute a unitary power collecting member 3a extending in an axial direction thereof.

By using such a power collecting member 3a, it is possible to collect electricity generated by the fuel cell 2 efficiently, as well as to allow the oxygen-containing gas supplied from the side face of the fuel cell stack 1 along the direction of arrangement of the fuel cells 2 to flow between the fuel cells 2 through the gap of the power collecting member 3a to thereby achieve heat exchange with the fuel cells 2. Note that the end-side power collecting member 3b may be similar in configuration to the power collecting member 3a.

Accordingly, since the temperature distribution of the fuel cell stack 1 can be made as nearly uniform as possible, it is possible to suppress a decrease in power generation efficiency in the fuel cell stack 1. That is, there is obtained a fuel cell apparatus that succeeds in providing enhanced power generation efficiency.

For example, while the description of the fuel cell stack of the invention deals with the case of using a hollow flat plate-shaped fuel cell as the fuel cell, a plate-shaped or cylindrical-shaped fuel cell may be used instead. In this case, the interval between the fuel cells may be varied by making changes to the sizes of, respectively, the oxygen-side electrode layer, the fuel-side electrode layer, the separator, and so forth that constitute the fuel cell.

## Claims

1. A fuel cell stack comprising:
an array of a plurality of fuel cells (2) electrically connected in series to each other, the fuel cells (2) each being formed by laminating a fuel-side electrode layer (5), a solid-state electrolytic layer (6), and an air-side electrode layer (4) one after another on a support substrate (8), an interval between adjacent fuel cells (2) arranged in a mid portion of the fuel cell stack (1, 15, 17) in a direction of arrangement of the fuel cells (2) being wider than an interval between adjacent fuel cells (2) arranged at either end of the fuel cell stack (1, 15, 17) in the direction of arrangement of the fuel cells,
**characterized in that**
the plurality of the fuel cells (2) arranged in the mid portion in the direction of arrangement of the fuel cells (2) are made smaller in thickness than the plurality of the fuel cells (2) arranged at either end in the direction of arrangement of the fuel cells (2).

2. The fuel cell stack of claim 1, wherein the plurality of the fuel cells (2) arranged at either end are so arranged that the interval between the adjacent fuel cells (2) becomes narrower gradually with approach toward a corresponding extremity in the direction of arrangement of the fuel cells (2).

3. The fuel cell stack of claim 1 or 2, wherein the fuel cell (2) is a hollow flat plate-shaped fuel cell and is disposed uprightly in a manifold for supplying a fuel gas to the fuel cell (2).

4. A fuel cell apparatus comprising:
the fuel cell stack (1, 15, 17) of any one of claims 1 to 3;
oxygen-containing gas supply means (20) for feeding an oxygen-containing gas to the fuel cell (2); and
a housing (19) for accommodating therein the fuel cell stack (1, 15, 17) and the oxygen-containing gas supply means (20),
an oxygen-containing gas being supplied from a side face of the fuel cell stack (1, 15, 17) along the direction of arrangement of the fuel cells (2), and the oxygen-containing gas flowing between the fuel cells (2).

5. The fuel cell apparatus of claim 4, wherein the fuel cells (2) are electrically connected in series to each other via a power collecting member (3a), and the power collecting member is so shaped as to permit the circulation of the oxygen-containing gas.

6. The fuel cell apparatus of claim 4 or 5, wherein the oxygen-containing gas supply means (20) is disposed so that the oxygen-containing gas is allowed to flow within the oxygen-containing gas supply means (20) in a direction from top to bottom along the fuel cell (2).

7. The fuel cell apparatus of any one of claims 4 to 6, wherein a reformer (21) for generating a fuel gas which is supplied to the fuel cell (2) is provided on top of the mounted fuel cell stack (1, 15, 17).

## Patentansprüche

1. Brennstoffzellenstapel, der Folgendes umfasst:
eine Anordnung mehrerer Brennstoffzellen (2), die miteinander elektrisch in Reihe geschaltet sind, wobei jede Brennstoffzelle (2) dadurch gebildet ist, dass nacheinander eine brennstoffseitige Elektrodenschicht (5), eine Festkörperelektrolytschicht (6) und eine luftseitige Elektrodenschicht (4) auf ein Trägersubstrat (8) laminiert sind, ein Zwischenraum zwischen benachbarten Brennstoffzellen (2), die in einem mittleren Abschnitt des Brennstoffzellenstapels (1, 15, 17) in Richtung der Anordnung der Brennstoffzellen (2) angeordnet sind, breiter ist als ein Zwischenraum zwischen benachbarten Brennstoffzellen (2), die an beiden Enden des Brennstoffzellenstapels (1, 15, 17) in Richtung der Anordnung der Brennstoffzellen angeordnet sind,
**dadurch gekennzeichnet, dass**
die mehreren Brennstoffzellen (2), die in dem mittleren Abschnitt in Richtung der Anordnung der Brennstoffzellen (2) angeordnet sind, eine geringere Breite haben als die mehreren Brennstoffzellen (2), die an beiden Enden in Richtung der Anordnung der Brennstoffzellen (2) angeordnet sind.

2. Brennstoffzellenstapel nach Anspruch 1, wobei die mehreren Brennstoffzellen (2), die an beiden Enden angeordnet sind, so angeordnet sind, dass der Zwischenraum zwischen den benachbarten Brennstoffzellen (2) bei Annäherung an den entsprechenden Endpunkt in Richtung der Anordnung der Brennstoffzellen (2) allmählich schmaler wird.

3. Brennstoffzellenstapel nach Anspruch 1 oder 2, wobei die Brennstoff zelle (2) eine hohle flache plattenförmige Brennstoffzelle ist und aufrecht in einer Sammelleitung angeordnet ist, um der Brennstoffzelle (2) ein Brennstoffgas zuzuführen.

4. Brennstoffzellenvorrichtung, die Folgendes umfasst:
den Brennstoffzellenstapel (1, 15, 17) nach einem der Ansprüche 1 bis 3;
Mittel (20) zum Zuführen sauerstoffhaltigen Gases, um der Brennstoffzelle (2) ein sauerstoffhaltiges Gas zuzuführen;
ein Gehäuse (19), um darin den Brennstoffzellenstapel (1, 15, 17) und die Mittel (20) zum Zuführen des sauerstoffhaltigen Gases unterzubringen, und
ein sauerstoffhaltiges Gas, das von einer Seitenfläche des Brennstoff zellenstapels (1, 15, 17) entlang der Richtung der Anordnung der Brennstoffzellen (2) zugeführt wird, wobei das sauerstoffhaltige Gas zwischen den Brennstoffzellen (2) strömt.

5. Brennstoffzellenvorrichtung nach Anspruch 4, wobei die Brennstoff zellen (2) durch ein Leistungsauffangelement (3a) miteinander elektrisch in Reihe geschaltet sind, und das Leistungsauffangelement ausgelegt ist, die Zirkulation des sauerstoffhaltigen Gases zu ermöglichen.

6. Brennstoffzellenvorrichtung nach Anspruch 4 oder 5, wobei e Mittel (20) zum Zuführen des sauerstoffhaltigen Gases ausgelegt sind, damit das sauerstoffhaltige Gas innerhalb der Mittel (20) zum Zuführen des sauerstoffhaltigen Gases in einer Richtung von oben nach unten entlang der Brennstoffzelle (2) strömen kann.

7. Brennstoffzellenvorrichtung nach einem der Ansprüche 4 bis 6, wobei auf dem befestigten Brennstoffzellenstapel (1, 15, 17) ein Reformer (21) zum Erzeugen eines Brennstoffgases, das der Brennstoffzelle (2) zugeführt wird, vorgesehen ist.

## Revendications

1. Assemblage de piles à combustible comprenant :
un ensemble d'une pluralité de piles à combustible (2) électriquement connectées en série les unes aux autres, les piles à combustible (2) étant chacune formées par stratification d'une couche (5) d'électrode de côté combustible, d'une couche (6) électrolytique à l'état solide, et d'une couche (4) d'électrode de côté air l'une après l'autre sur un substrat support (8), un intervalle entre piles à combustible (2) adjacentes agencées dans une partie médiane de l'assemblage (1, 15, 17) de piles à combustible dans un sens d'agencement des piles à combustible (2) étant plus large qu'un intervalle entre piles à combustible (2) adjacentes agencées à l'une ou l'autre extrémité de l'assemblage (1, 15, 17) de piles à combustible dans le sens d'agencement des piles à combustible,
**caractérisé en ce que**
la pluralité des piles à combustible (2) agencées dans la partie médiane dans le sens d'agencement des piles à combustible (2) sont réalisées plus petites en épaisseur que la pluralité des piles à combustible (2) agencées à l'une ou l'autre extrémité dans le sens d'agencement des piles à combustible (2).

2. Assemblage de piles à combustible selon la revendication 1, dans lequel la pluralité des piles à combustible (2) agencées à l'une ou l'autre extrémité sont agencées de telle manière que l'intervalle entre les piles à combustible (2) adjacentes devient graduellement plus étroit en approchant vers une extrémité correspondante dans le sens d'agencement des piles à combustible (2).

3. Assemblage de piles à combustible selon la revendication 1 ou 2, dans lequel la pile à combustible (2) est une pile à combustible creuse en forme de plaque plate et est disposée verticalement dans un collecteur pour délivrer un gaz combustible à la pile à combustible (2).

4. Appareil à piles à combustible comprenant :
l'assemblage (1, 15, 17) de piles à combustible selon l'une quelconque des revendications 1 à 3 ;
un moyen (20) d'alimentation en gaz contenant de l'oxygène pour alimenter un gaz contenant de l'oxygène dans la pile à combustible (2) ; et
un logement (19) pour recevoir dans celui-ci l'assemblage (1, 15, 17) de piles à combustible et le moyen (20) d'alimentation en gaz contenant de l'oxygène,
un gaz contenant de l'oxygène étant alimenté depuis une face latérale de l'assemblage (1, 15, 17) de piles à combustible dans le sens d'agencement des piles à combustible (2), et le gaz contenant de l'oxygène s'écoulant entre les piles à combustible (2).

5. Appareil à piles à combustible selon la revendication 4, dans lequel les piles à combustible (2) sont électriquement connectées en série les unes aux autres par l'intermédiaire d'un élément (3a) de collecte d'énergie, et l'élément de collecte d'énergie est formé de façon à permettre la circulation du gaz contenant de l'oxygène.

6. Appareil à piles à combustible selon la revendication 4 ou 5, dans lequel le moyen (20) d'alimentation en gaz contenant de l'oxygène est disposé de telle façon que le gaz contenant de l'oxygène est laissé s'écouler à l'intérieur du moyen (20) d'alimentation en gaz contenant de l'oxygène dans un sens du haut vers le bas le long de la pile à combustible (2).

7. Appareil à piles à combustible selon l'une quelconque des revendications 4 à 6, dans lequel un reformeur (21) pour générer un gaz combustible qui est alimenté jusqu'à la pile à combustible (2) est prévu au sommet de l'assemblage (1, 15, 17) de piles à combustible monté.
